# FASCICULE DE BREVET EUROPEEN

(11) **EP 2 842 250 B1**
(45) Date de publication et mention de la délivrance du brevet: **05.12.2018**
(21) Numéro de dépôt: 13719800.8
(22) Date de dépôt: 24.04.2013
(51) Int. Cl.: H04L 1/00, H04W 28/06

(54) **SYSTÈME ET PROCÉDÉ POUR TRANSMETTRE PLUSIEURS FLUX MULTISERVICES EN BANDE HF**
SYSTEM UND VERFAHREN ZUR ÜBERTRAGUNG EINER VIELZAHL VON MULTISERVICE-STRÖMEN ÜBER EIN HF-BAND
SYSTEM AND METHOD FOR TRANSMITTING A PLURALITY OF MULTISERVICE STREAMS OVER AN HF BAND

(30) Priorité: 27.04.2012 FR 1201242
(43) Date de publication de la demande: 04.03.2015
(73) Titulaire: THALES, 92400 Courbevoie (FR)
(72) Inventeur: LAMY-BERGOT, Catherine, F-92622 Gennevilliers Cedex (FR); BERNIER, Jean-Yves, B-1480 Tubize (BE)
(74) Mandataire: Dudouit, Isabelle
(86) Numéro de dépôt international: PCT/EP2013/058529
(87) Numéro de publication internationale: WO 2013/160366

(56) Documents cités:
- WO-A1-2006/011699
- US-A1- 2005 246 609

## Description

L'invention concerne un système et un procédé pour véhiculer plusieurs flux requérant des qualités de service différentes, notamment en termes d'exigences de latence/gigue et de taux d'erreur résiduel.

Elle concerne plus particulièrement le domaine des communications hautes fréquences ou HF et des transmissions à moyen ou haut débit, typiquement des valeurs de débits supérieures à 4kb/s, voire à très haut débit typiquement des valeurs de débit supérieures à 32 kb/s.

L'invention s'applique à des liaisons de type point à point et, plus généralement, à un usage multipoints dans le cadre de l'utilisation du protocole TDMA (abrégé anglo-saxon de Time Division Multiple Access) pour une liaison entre plusieurs utilisateurs.

La capacité de communication à longue distance des liens HF repose sur la réflexion des ondes HF variant dans la gamme [2, 30 MHz], sur les couches ionosphériques. Les couches ionosphériques ne sont pas stables dans le temps et l'espace, ce qui amène de fortes variations du canal de propagation. A cette instabilité du canal vient s'ajouter également d'éventuels brouilleurs intentionnels ou non, en particulier la nuit où le spectre HF passant est moins important.

S'il est instable, ce canal présente toutefois comme intérêt de permettre des communications à longue distance sans qu'il soit nécessaire de déployer au préalable une infrastructure compliquée ou coûteuse, à la différence des communications par satellite, par exemple. Bien que présentant ces propriétés intéressantes, le canal HF n'est actuellement exploité que pour des services assez simples (télégraphie, phonie, transferts de fichiers bas débit) du fait des faibles débits offerts. On recherche donc actuellement à augmenter les débits offerts par les liens HF, jusqu'à arriver à des débits suffisants pour permettre la transmission de différents types de données (la phonie, le transfert de fichiers, la messagerie, la visiophonie, l'imagerie à la demande, par exemple).

Un problème posé, dans le cadre d'une utilisation multiservices pour une transmission en bande HF, est lié au fonctionnement à l'alternat, celui-ci étant généralement couplé à des durées d'entrelacement assez longues pour lutter contre les évanouissements instantanés très importants que connaît le canal de propagation HF.

Une solution connue est de choisir un entrelaceur de faible taille et un alternat rapide, correspondant à des performances brutes moins bonnes mais à une réactivité plus grande nécessaire pour des applications à forte contrainte temps réel comme la phonie.

Une autre solution consiste à utiliser un entrelaceur de grande taille et un alternat plus lent, par exemple de 9 secondes de durée de trame en entrelacement très long dans la norme stanag 4539 connue de l'Homme du métier, lorsque de très bonnes performances en terme de taux d'erreur sont attendues, que les contraintes de latence ou de gigue sont faibles, comme c'est le cas pour la transmission de données, par exemple.

Dans le cas d'une approche multiservices, il est connu de l'art antérieur de traiter les services de manière séquentielle, et ainsi d'adapter au mieux les conditions de communication à chacun d'eux. En pratiquant ainsi, il n'est pas possible de multiplexer les services. Les contraintes en temps réel d'un service donné ne pourront donc pas être servies sans arrêter le service en cours s'il est activé lorsqu'une communication pour un autre service est déjà établie. Ceci interdit de plus des usages particuliers, comme par exemple de basculer sur un canal de phonie que l'on veillerait en parallèle d'une transmission de données sans interrompre cette dernière. Ceci impose également un délai important avant la transmission des acquittements ou d'informations de signalisation entre les postes réalisant la communication. Dans le cas consistant à servir les flux de manière séquentielle, il n'est pas possible de réaliser plusieurs communications en parallèle sur un même lien et donc il faut attendre la fin de la communication pour que le service suivant soit établi.

Il est aussi connu de traiter les services conjointement, en prenant en compte les contraintes les plus fortes dans chacun des domaines (latence, gigue, taux d'erreur) si c'est possible ou, à défaut, les contraintes les plus fortes sur la tenue du temps réel (latence, gigue) et utiliser le mécanisme de retransmissions ARQ pour réussir à passer le ou les services le ou les plus sensibles. La forte contrainte imposée à la durée de l'alternat va fortement dégrader les performances en termes de taux d'erreur, rendant le multiplexage peu efficace.

A titre d'exemple, on peut être amené à diviser le débit servi par deux ou plus en passant d'un mode de type transmission de données avec entrelaceur très long avec la norme MIL STD 188-110B (cible TEB=10⁻⁵) à un mode type phonie avec entrelaceur court avec la norme MIL STD 188-110A (cible TEB = 10⁻³).

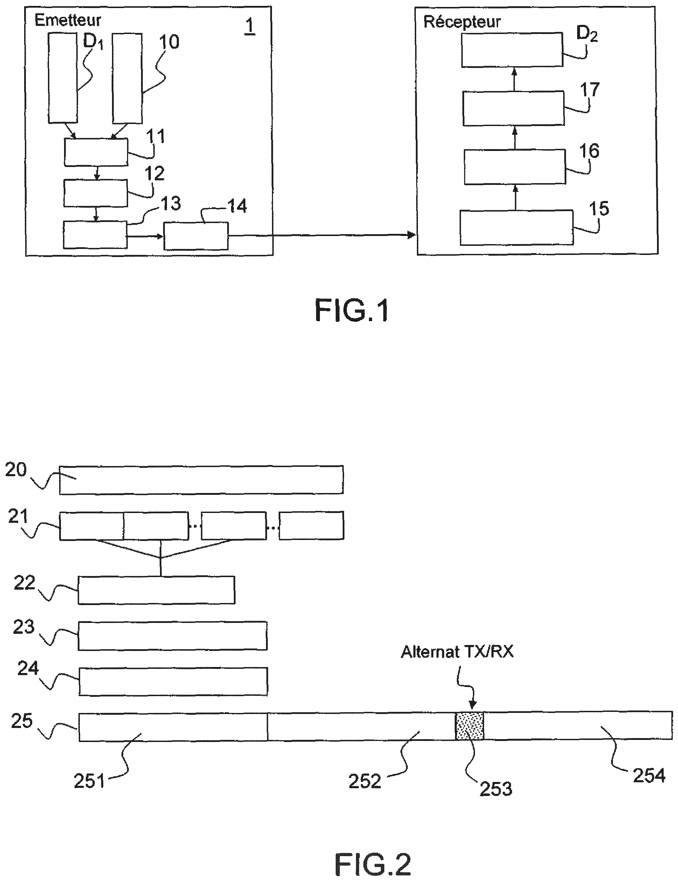

La figure 1 rappelle les principes de traitement des données mis en oeuvre dans un système de radiocommunications. Les données D₁ arrivent au niveau du récepteur 1 dans une file d'attente 10 pour être traitées par un ordonnanceur 11 éventuellement avec les retransmissions 10' venant du mécanisme de retransmission (ARQ) fiabilisant la liaison. L'ordonnanceur traite ces données et prépare la trame 12 pour envoi vers la couche physique comprenant le codage correcteur 13, entrelacement et modulation 14.La trame ainsi modulée est alors émise sur le canal HF avant d'être reçue par le récepteur 2 comprenant démodulation et désentrelacement 15 et décodage correcteur 16 avant le passage dans le pendant de l'ordonnanceur 17 qui reconstitue les paquets, pour obtenir les données D₂.

La figure 2 schématise l'enchainement des étapes de traitement des flux en utilisant un procédé de l'art antérieur. Sur la figure 2 on a schématisé la couche liaison et la couche physique.

Au niveau de la couche liaison, le flux de données 20 à transmettre est tout d'abord segmenté 21 en plusieurs blocs Bi (cellule unitaire pour le processus de fiabilisation de la liaison ARQ, qui est un mécanisme de retransmission de l'information ou en anglo-saxon « Automatic Repeat re-Quest »). Puis le procédé prépare la trame 22 en ajoutant par exemple des en-têtes, en mettant la trame au format requis pour la transmission, puis ajoute 23 un codage correcteur d'erreur. Les données de la trame vont ensuite être entrelacées 24 selon une méthode connue de l'Homme du métier. Le procédé va ensuite émettre la trame 25 selon une séquence d'émission d'une ou plusieurs trames (251, 252, ..) suivi d'un alternat TX/RX (émission/réception), 253, puis une séquence de réception d'une ou plusieurs trames (254, ..). Dans cet exemple de réalisation, les données sont entrelacées après l'étape d'ARQ, l'étape de mise en forme de la trame et l'étape d'introduction d'un codage correcteur. Le débit est adapté à travers le choix de modulation et de codage. L'entrelacement est adapté à travers la durée de l'entrelaceur aux besoins du service considéré. Typiquement, la phonie acceptera un taux d'erreur cible de la classe précitée 10⁻³, mais nécessitera l'emploi d'un entrelaceur court (inférieur à 1s) alors qu'un transfert de données cible un taux d'erreur inférieur à 10⁻⁵ mais accepte l'emploi d'entrelaceurs long (typiquement supérieur à 9s).

Le document US 2005/246609 décrit un procédé de codage qui mixe les mots codés avant transmission.

L'un des objectifs de la présente demande de brevet est d'offrir un système et un procédé permettant de multiplexer de manière efficace différents services ayant des qualités de service différentes sur un même lien de communication, et ce sans dégrader les performances de transmission en terme de débit utile global transmis.

Les définitions suivantes seront utilisées pour la suite de la description.

Un flux est un ensemble de données provenant des couches applicatives et qui sont amenées au système de transmission pour être envoyées vers un ou plusieurs récepteurs. Les données de ce flux, arrivant par exemple sous forme de paquets (comme dans le cas des applications sur IP) sont stockées pour traitement dans des files d'attente. Les différents mécanismes du système de transmission viennent prendre les données dans les files d'attente en fonction de leur capacité pour préparer les trames qui seront transmises. En pratique il y a différents niveaux de files d'attente entre les différentes instances de traitement du système radio, même si par simplification on parle plus souvent de file d'attente en se référant à celles existant au niveau du processus ARQ, qui introduit des files spécifiques pour les retransmissions. Les trames sont constituées d'un ensemble de données avec en-tête, qui sont adressées d'un émetteur à un ou plusieurs récepteurs distant. Une trame véhicule une partie des informations d'un flux de données.

L'objet de l'invention concerne un procédé pour transmettre des données dans un système de communication fonctionnant en HF comprenant une couche liaison et une couche physique, ledit système comprenant un émetteur et un récepteur, ledit émetteur comportant au moins un ordonnanceur, le procédé est caractérisé en ce que les flux de données sont constitués de flux G₁ de données temps non contraint et de flux de données G₂ temps contraint, et en ce qu'il comporte au moins les étapes suivantes :
Au niveau de la couche de liaison :
   - segmenter les flux de données ayant des caractéristiques de temps non contraint compatibles G₁ en plusieurs blocs G_{1A}Bi, G_{1B}Bi, G_{1C}Bi, un sous-bloc correspondant à une cellule unitaire pour un processus de retransmission ARQ, puis
   - préparer une ou plusieurs trames de données TG₁, en ajoutant des en-têtes requis pour le format utilisé pour la transmission,
   - réaliser un codage d'une trame de données en tenant compte d'une qualité de service requise, les paramètres du codage sont adaptés à la mise en forme de la trame, produisant des sous-trames, STG_{1Ac}, STG_{1Bc}, STG_{1cc},
   - segmenter les flux de données ayant des caractéristiques de temps contraint, en plusieurs blocs G_{2A}Bi,
   - préparer une trame correspondante TG_{2A}, en ajoutant un en-tête,
   - réaliser un codage et un entrelacement, puis segmenter chaque trame pour obtenir des sous-trames STG_{2Ac}, STG_{2B},
   - préparer à partir des sous-trames résultant des étapes de segmentation les données la trame PHY à transmettre,
   - préparer plusieurs trames T₃G en mixant les sous-trames issues du flux non contraint G1 et du flux contraint G2, les sous-trames STG_{1Ac}, STG_{1Bc}, STG_{1cc}, STG_{2Ac}, STG_{2B},
Au niveau de la couche physique :
   - transmettre les trames T₃G.

Le procédé peut comporter une étape de codage correcteur d'erreur, générant des sous-trames codées F₃c avant l'étape d'entrelacement.

L'étape de transmission des trames T₃G peut être exécutée en respectant un cycle comportant une étape d'émission d'une première trame, suivie d'une étape d'alternat RX/TX, suivi d'une étape de réception de trames dans un intervalle temporel de réception, suivi, de l'émission d'une deuxième trame T₃G.

Le procédé peut comporter une étape de codage correcteur d'erreur avant l'étape d'entrelacement des trames T₃G.

L'étape de transmission des trames T₃G comporte, par exemple, une étape d'émission de trames, suivie d'un temps de garde, suivie d'une émission d'une deuxième trame, suivie d'un temps de garde.

Le procédé peut comporter une étape de surveillance ou d'écoute des données reçues lors d'un temps correspondant au procédé d'alternat et la prise en compte les données temps contraint du service à temps contraint G₂, par exemple la phonie, en les traitant avec des données flux non contraint.

Le procédé selon l'invention est par exemple mis en oeuvre au sein d'un système de communication de données et il est caractérisé en ce que le premier flux est un flux non contraint H₁, H₂ et le deuxième flux est un flux contraint et en ce que seul le flux non contraint est codé et entrelacé au niveau de la couche physique liaison d'un système de transmission de données.

L'invention concerne aussi un système pour transmettre plusieurs flux multiservices en bande HF comportant au moins les éléments suivants : un émetteur comprenant au moins un ordonnanceur adapté à exécuter les étapes du procédé présentant l'une des caractéristiques précitées, à préparer les trames de données des flux multiservices avant transmission sur un canal HF, et un récepteur.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un rappel du traitement des données dans un système de radiocommunications,
- La figure 2, les étapes de traitement des données selon l'art antérieur,
- La figure 3, un schéma représentant le système et le procédé selon l'invention,
- La figure 4, une variante de la figure 1 dans le cas de flux temps contraint et de flux non temps contraint,
- La figure 5, une variante de la figure 1 avec une optimisation du codage correcteur au niveau de la couche radio,
- La figure 6, une variante de l'invention pour plusieurs flux dans le cas d'une communication « full duplex »,
- La figure 7, une variante dans le cas d'un partage TDMA, et
- La figure 8, un schéma décrivant les étapes du procédé mis en oeuvre.

Afin de mieux faire comprendre les caractéristiques du système selon l'invention, la description qui va suivre est donnée dans le cas d'un système à l'alternat d'une transmission multiservices en bande HF. Sans sortir du cadre de l'invention, les systèmes et les procédés qui vont être décrits s'appliquent aussi pour des communications full-duplex, ou encore des communications utilisant le protocole TDMA.

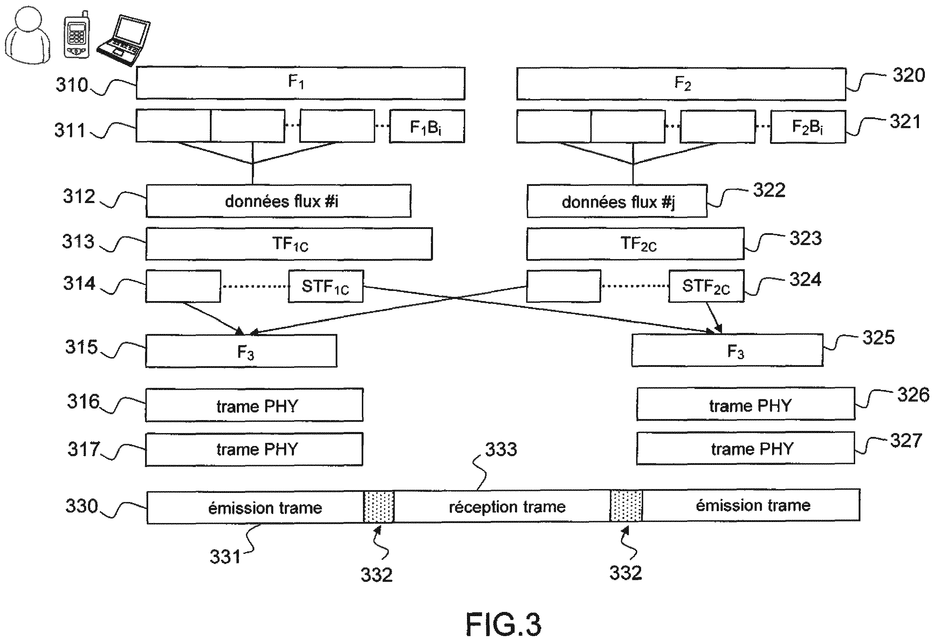

La figure 3 schématise la chronologie des différentes étapes mises en oeuvre par l'invention pour le cas de deux flux de données à transmettre.

Au niveau de la couche liaison, le premier flux F₁ ou paquets de données 310 est segmenté 311 en plusieurs blocs F₁Bi (cellule unitaire pour le processus de retransmission ARQ) selon un procédé connu de l'art antérieur. Puis le procédé prépare, 312, une première trame TF₁ en ajoutant par exemple des en-têtes, en mettant la trame au format requis pour la transmission. Le procédé va ensuite, 313, réaliser un codage et un entrelacement de la trame de données, TF_{1c}, dont les paramètres sont adaptés à la mise en forme de la trame. Ces opérations sont effectuées en fonction des exigences de qualité de service du service considéré. Un des avantages offerts par cette phase d'entrelacement est de répartir les données sur plusieurs trames et ce, de manière transparente pour la couche physique. Elle permet de plus, en cas extrême, d'entrelacer sur plusieurs trames un unique flux de données et ainsi d'augmenter la taille de l'entrelaceur au-dessus d'une couche physique inchangée, ceci en gardant la capacité à avoir un retour à l'alternat plus rapide que la taille d'un tel entrelaceur.

Dans le cas de couches physiques existantes ne permettant pas de proposer une solution sans codage correcteur par défaut, l'étape de codage correcteur et d'entrelacement introduit au niveau de la couche liaison devra donc prendre en compte la présence de ce codage. Le résultat de cet entrelacement est 314 la génération de sous-trames STF_{1c}.

Le deuxième flux de données F₂ est traité de manière identique lors de la succession d'étapes 321 (segmentation F₂Bi), 322 (ajout des en-têtes), 323 (codage entrelacement TF_{2c}), pour obtenir, 324, les sous-trames STF_{2c}.

Au niveau de la couche physique PHY du système de communication, lors des étapes 315 et 325, le procédé va préparer les données de la trame physique PHY à transmettre, selon des consignes fixées par un ordonnanceur. Ce dernier en fonction des caractéristiques des flux, de la qualité de service QoS requise, de la latence, etc. va préparer les trames de données en mixant des sous-trames STF_{1c} du flux de données F₁ avec des sous-trames STF_{2c} du flux de données F₂. Ceci permet d'obtenir une trame F₃ comprenant des sous-trames STF_{1c} et des sous-trames STF_{2c}. En pratique, ces sous-trames STF_{1c}, STF_{2c}, ... seront concaténées avec ajout d'un en-tête permettant de les re-séparer côté récepteur. C'est l'étape d'entrelacement de la trame F qui réalisera le mélange des différentes sous-trames avant la transmission sur le canal (étape d'entrelacement classique permettant d'offrir, combinée avec le codage correcteur, une protection relative face aux évanouissements).

Le procédé continue en introduisant un codage correcteur d'erreur 316, 326, étape qui est optionnelle et qui fournit des sous-trames codées TF_{3c}. Puis le procédé va réaliser une étape d'entrelacement 317, 327 des trames F_{3c} au niveau de la trame PHY.

L'étape suivante consiste à transmettre 330 les trames codées T_{3c} et entrelacées T_{3ce} ainsi préparées, en alternant l'émission 331 de trame, l'alternat TX/RX 332, la réception de trames 333.

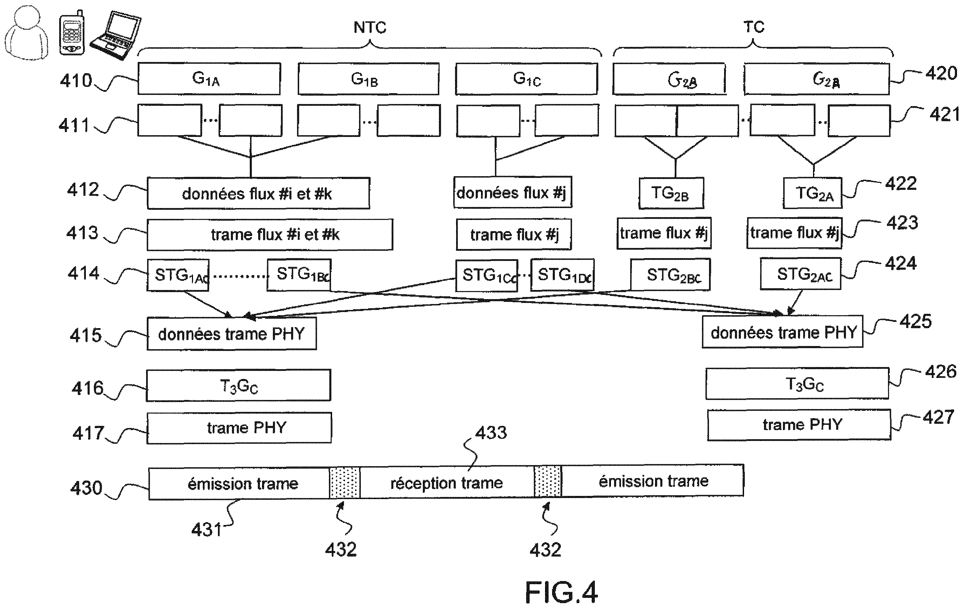

La figure 4 est une variante de mise en oeuvre du procédé décrit à la figure 3 qui concerne plusieurs flux de données à transmettre non temps contraint NTC, G₁ et deux flux de données temps contraint TC, G₂.

Dans cet exemple de réalisation, le point clef pour le traitement des flux est le caractère temps contraint ou « temps non contraint », c'est-à-dire le niveau de contrainte sur la latence et la gigue associée à chaque service associé à chacun des flux de données.

L'ordonnanceur au niveau de l'étape de préparation de la trame physique PHY va répartir les sous-trames selon leur qualification temps contraint ou temps non contraint. En pratique, c'est l'application à temps contraint qui va amener la contrainte maximale en termes de temps entre deux alternats. La qualité de service souhaitée en termes de latence pour ce service TC amènera à rechercher une durée de cycle émission/réception inférieure à sa contrainte, et donc à découper des trames TF de taille compatibles avec un envoi en une seule émission sur la couche physique. Ceci est illustré en Figure 4 par le fait que les trames 423 de la file à temps contraint ne sont pas redécoupées en plusieurs sous-trames 424 mais envoyées telles que vers l'étape 425 les concaténant avec les données des files non temps contraint. Dans le cas où plusieurs files TC seraient présentes, mais avec des contraintes de temps différentes, on peut choisir de garder la contrainte la plus forte, ou permettre pour les files TC moins contraintes en temps, un niveau d'entrelacement au niveau liaison comme dans les files NTC. En pratique, les files NTC se voient appliquer un entrelaceur au moins aussi grand que l'entrelaceur le plus large possible pour le standard de couche physique considéré, et comme il a été expliqué précédemment il est possible, si besoin, d'envisager d'entrelacer sur des largeurs encore plus importantes. En pratique, l'intérêt du procédé selon l'invention est de gérer les flux en introduisant autant de files TC qu'il y a de niveaux de qualité de service notablement différents (connu sous l'abréviation anglo-saxonne « SLA » pour service level agreement).

Sur la figure 4 on a représenté trois flux temps non contraint TNC, les flux G_{1A}, G_{1B}, G_{1C} ou paquets de données 410. Chacun de ces flux est segmenté 411 en plusieurs blocs G_{1A}Bi, G_{1B}Bi, G_{1C}Bi (cellule unitaire pour le processus de retransmission ARQ) selon un procédé connu de l'art antérieur. Si l'on considère que les deux flux G_{1A}Bi, G_{1B}Bi ont des temps non contraints compatibles, alors le procédé prépare, 412, une première trame de données TG₁ en ajoutant par exemple des en-têtes, et en mettant les données au format requis pour la transmission. Le procédé va aussi effectuer une deuxième trame de données T'G₁ à partir du flux G_{1c}Bi. Le procédé réalise, 413, un codage et un entrelacement pour chaque trame de données TG_{1c}, T'G_{1c}, dont les paramètres sont adaptés à la mise en forme de la trame. Ces opérations sont effectuées en fonction des exigences de qualité de service du service considéré pour une application donnée et pour un flux de données. Un des avantages offert par cette phase d'entrelacement est de répartir les données sur plusieurs trames TG_{1c} et ce, de manière transparente pour la couche physique. Elle permet de plus, en cas extrême, d'entrelacer sur plusieurs trames TG₁ un unique flux de données et ainsi d'augmenter la taille de l'entrelaceur au-dessus d'une couche physique inchangée, ceci en gardant la capacité à avoir un retour à l'alternat plus rapide que la taille d'un tel entrelaceur.

Dans le cas de couches physiques existantes ne permettant pas de proposer une solution sans codage correcteur par défaut, l'étape de codage correcteur et d'entrelacement introduit au niveau liaison devra donc prendre en compte la présence de ce codage. Le résultat de cet entrelacement est la génération 414 d'un premier type de sous-trames STG_{1c}.

Le deuxième flux de données G₂ est traité de manière identique. Sur la figure 4 on a représenté deux types de flux temps contraint G_{2A}, G_{2B} qui sont segmentés 421, en blocs G_{2A}Bi, G_{2B}Bi. A partir des sous-blocs G_{2A}Bi, G_{2B}Bi, le procédé prépare deux trames, 422, TG_{2A}, TG_{2B} (ajout des en-têtes). Pour chacune des trames, le procédé exécute une étape de codage et d'entrelacement 423 (codage - entrelacement TG_{2Ac}, TG_{2Bc}) selon les contraintes du flux. Ensuite, chaque trame TG_{2Ac}, TG_{2Bc} est segmentée pour obtenir, 424, des sous-trames STG_{2Ac}, STG_{2Bc}.

Lors des étapes 415 et 425, le procédé va préparer, à partir des sous-trames résultant des étapes de segmentation, les données de la trame PHY à transmettre selon des consignes données par un ordonnanceur. Ce dernier en fonction des caractéristiques des flux, de la qualité de service, de la latence, par exemple, va préparer des trames T₃G en mixant les sous-trames issues du flux G1 et du flux G2, à savoir les sous-trames STG_{1Ac}, STG_{1Bc}, STG_{1cc} STG_{2Ac}, STG_{2Bc} sur la figure 4.

Le procédé continue en introduisant un codage correcteur d'erreur 416, 426, étape qui est optionnelle et qui fournit des trames codées T₃G_{c}. Puis le procédé va réaliser une étape d'entrelacement 417, 427 des trames codées T₃G au niveau de la trame PHY.

L'étape suivante consiste à transmettre les trames ainsi préparées, en alternant l'émission de trame 430, l'alternat TX/RX 431, la réception de trames 432.

Les données d'une trame peuvent être réparties entre des alternats.

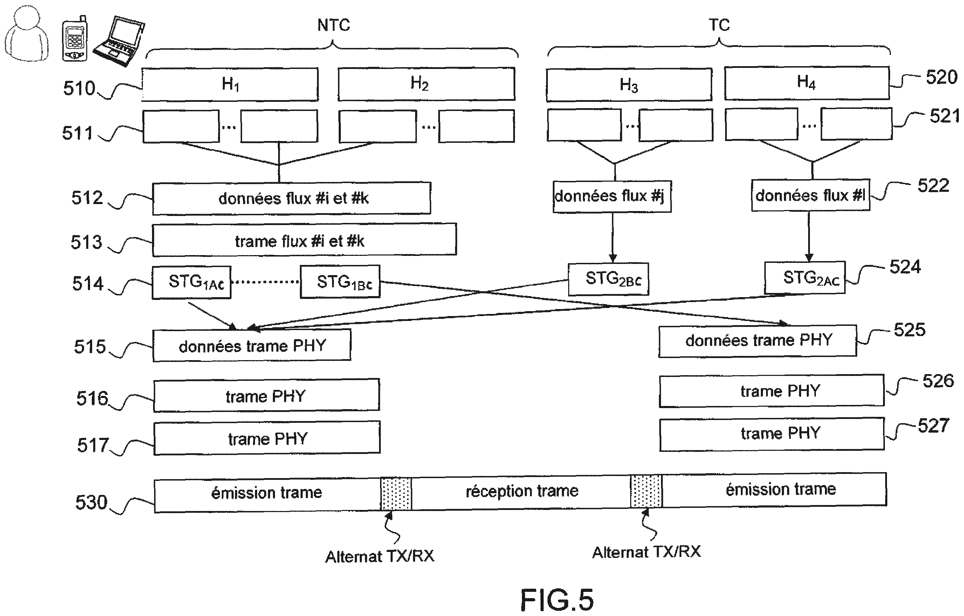

La figure 5 représente une variante de réalisation de l'invention dans le cas de deux flux NTC H₁, H₂ et de deux flux TC H₃, H₄.

Les deux flux temps non contraints H₁, H₂ après segmentation 511 sont traités, par exemple, pour ajouter des en-têtes, en mettant au format requis pour la transmission 512. Le procédé va ensuite, 513, réaliser un codage et un entrelacement de la trame, dont les paramètres sont adaptés à la mise en forme de la trame. Ces opérations sont effectuées en fonction des exigences de qualité de service du service considéré. Les données entrelacées sont ensuite segmentées 514 pour générer plusieurs sous-trames. Lors de l'étape 515, le procédé va préparer la trame PHY à transmettre selon des consignes données par un ordonnanceur. La trame de données est codée 514 en utilisant un code correcteur d'erreurs connu de l'Homme du métier. Puis les données codées sont ensuite entrelacées 517.

Pour les deux flux temps contraints H₃, H₄, comme dans l'exemple de la figure 4 où l'on considérait un unique flux temps contraint G2, il n'y a pas d'entrelacement réalisé au niveau liaison. Il est également possible de s'appuyer sur la couche physique pour effectuer l'opération de codage correcteur 526. Une telle optimisation permet notamment de gagner en temps de traitement dans les couches à accès radio, ce qui est intéressant pour des flux à contrainte temps réel, notamment si l'on est en mesure d'introduire un codage correcteur adapté au niveau de la couche physique, par exemple de type protection inégale aux erreurs.

Les trames de données résultant des deux chaînes de traitement, temps non contraint, temps contraint sont ensuite distribuées pour la transmission, en respectant, par exemple, l'émission d'une trame, l'alternat TX/RX, la réception d'une trame, l'alternat, la réception.

Dans le cas d'une application de veille pour la phonie, le procédé va permettre à un récepteur de surveiller ou d'écouter régulièrement les données reçues lors de l'alternat selon un procédé connu de l'Homme du métier et de basculer d'un premier état dans lequel le système ne reçoit que des flux de données à temps non contraint, vers un deuxième état prenant en compte les flux de données temps contraint selon un principe décrit par exemple à la figure 4 ou la figure 5. Le procédé selon l'invention offre ainsi naturellement l'avantage de pouvoir basculer sur une communication phonie, par exemple détectée en veillant un canal de phonie lors des phases de réception, en parallèle d'une transmission de données sans interrompre cette dernière.

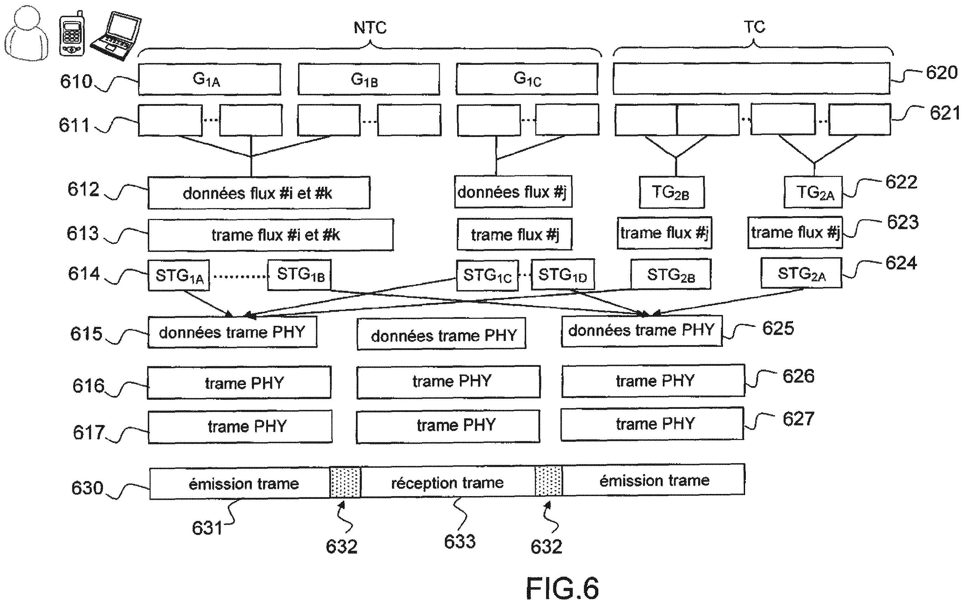

La figure 6 schématise un exemple de mise en oeuvre du système et du procédé selon l'invention dans le cas d'une liaison dans laquelle les données circulent de façon bidirectionnelle et simultanément, plus connue sous l'acronyme anglo-saxon « full-duplex ». Les étapes de traitement des flux contraints et non contraints sont semblables à celles décrites dans la figure 4.

Les données sont transmises selon la séquence suivante ; émission de données d'une trame, temps de garde, émission de données d'une trame, etc.

Au niveau de la partie récepteur, la réception des flux s'effectue, par exemple, de la manière suivante : réception - alternat - réception - alternat ... et ce de manière synchrone.

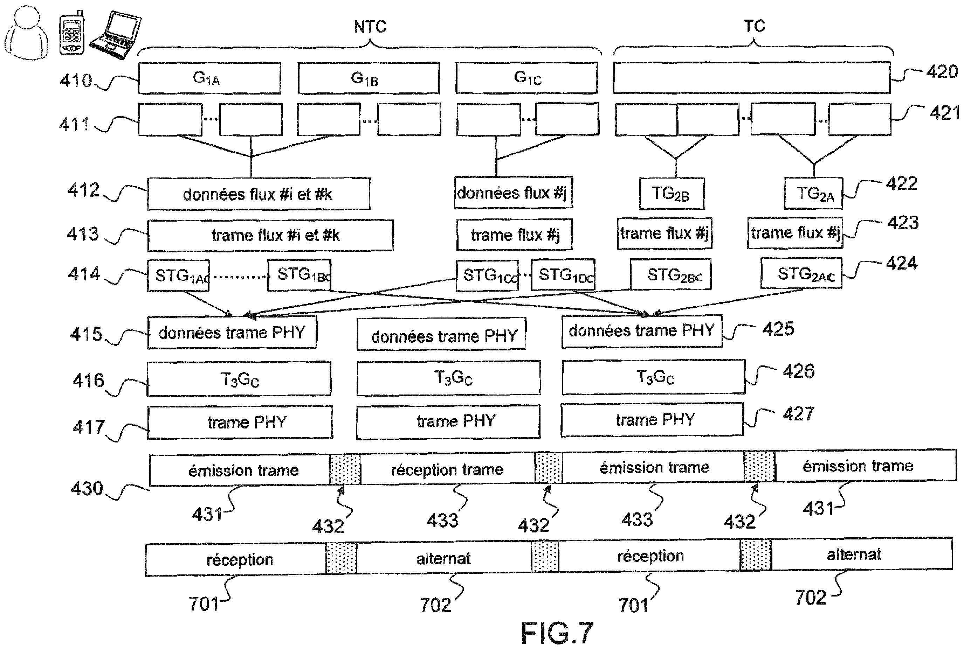

La figure 7 schématise une mise en oeuvre dans le cas d'une communication utilisant le protocole d'accès multiple à répartition dans le temps plus connu sous l'acronyme anglo-saxon « TDMA » pour Time Division Multiple Access. Dans ce cas, les étapes du traitement des données sont similaires aux étapes décrites à la figure 4. Pour l'étape de transmission d'une trame, la séquence est par exemple la suivante, émission d'une trame, garde, réception de trame, garde, réception de trame. Les données d'une trame peuvent être réparties en plusieurs trames du fait de l'utilisation du TDMA.

Au niveau de la partie récepteur, la réception des flux s'effectue, par exemple, de la manière suivante : réception 701 - alternat 702 - réception701 - alternat ... et ce de manière synchrone.

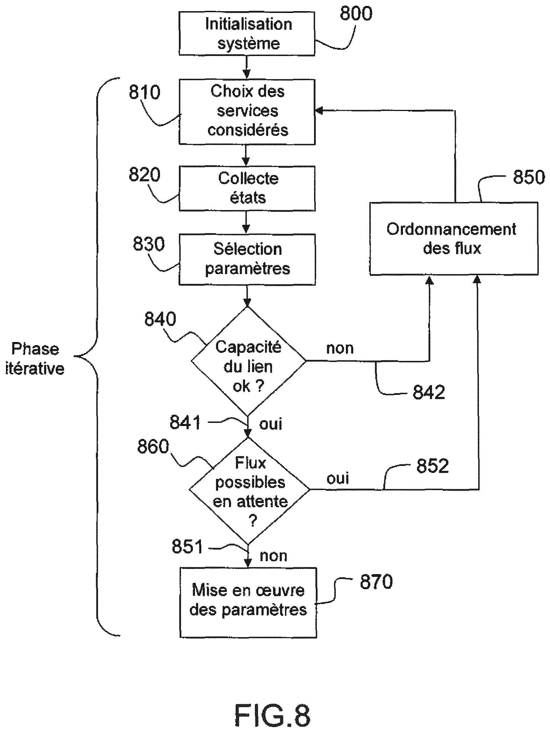

La Figure 8 présente un algorithme permettant de converger sur le choix de paramètres pour les différents services à servir. Les étapes de cet algorithme sont les suivantes :
800, 810 - une étape d'initialisation système dans laquelle le système collecte des informations (services à fournir, débits et SLA associés),
820 - une étape de détermination pour chacun des services possibles pour le système considéré de ses points de fonctionnement : latence, débit, taux d'erreur cibles,
830 - l'établissement de l'ensemble des couches PHY disponibles pour le système considéré,
840 - l'adaptation au lien de transmission (étape récurrente)
o la mise à jour informations de l'état des files
o la détermination de la capacité offerte par le lien radio (e.g. niveau de bruit ...), dans le cas où la capacité du lien ne permet pas de traiter tous les flux, 842, on retourne vers une étape d'ordonnancement 850 qui gère les flux en fonction de leur priorité, dans le cas où la capacité du lien le permet 841, alors le procédé va passer à l'étape suivante de vérification des flux de données,
o le suivi des états des différentes files des services considérés, y compris des files ARQ pour les messages NTC,
o la sélection des paramètres pour la communication comprenant:
   o la récurrence de l'alternat fixée par le service le plus contraignant en latence/gigue,
   o le niveau de codage et d'entrelacement pour les flux définis en fonction de leur point de fonctionnement cible et de leur contrainte de latence/gigue Par défaut on propose une solution à deux classes : une file TC temps contraint, et une file NTC maximisant les performances TEB.
   850 - la boucle ordonnancement est une boucle de contrôle gérant les flux en fonction de leur priorité permet de n'accepter que les flux les plus importants lorsque les capacités du lien sont inférieures au volume total à émettre.
   870 - une étape de mise en oeuvre des paramètres retenus pour la transmission de données.

Le procédé selon l'invention s'appuie sur une décorrélation de la taille de la trame de données de l'alternat et permet de passer à une approche de multiplexage des données dans la trame physique transmise, avec une gestion des processus ARQ des services au-dessus d'une couche physique PHY standard ou optimisée en termes de codage correcteur. Elle permet de faire fonctionner sur un même lien HF exploité à l'alternat plusieurs canaux logiques avec des exigences différentes et donc de multiplexer des services aussi divers comme la phonie et le transfert de fichiers. L'invention permet de garantir la tenue des exigences de qualité de service en termes de latence/gigue. Elle permet aussi aux flux de données peu ou non contraints en termes de latence/gigue de bénéficier des performances améliorées par l'emploi d'un grand entrelaceur. En mettant en oeuvre le système et le procédé selon l'invention, il est possible d'utiliser le même lien HF pour des applications avec des exigences de qualité de service très variables, et cela en adaptant au plus juste les niveaux d'entrelacement et de protection à chaque flux. Enfin l'invention permet de profiter de l'emploi d'un grand entrelaceur tout en ayant un retour plus rapide en termes de signalisation.

L'efficacité du système et du procédé selon l'invention est basée sur un entrelacement rapide entre les trames émission et réception courtes. La commutation entre l'émission et la réception est faible devant la longueur des trames. Cette approche est compatible avec différents modes de transmission, point à point, TDMA, Le mécanisme est également compatible avec des couches physiques existantes (standardisées et/ou implantées dans des produits existants), mais pourrait aussi s'appliquer de manière intéressante sur des couches physique optimisées, par exemple en considérant la possibilité d'utiliser des codes correcteurs à protection inégale.

## Revendications

1. Procédé pour transmettre des données dans un système de communication fonctionnant en HF comprenant une couche liaison et une couche physique, ledit système comprenant un émetteur et un récepteur, ledit émetteur comportant au moins un ordonnanceur, le procédé est **caractérisé en ce que** les flux de données sont constitués de flux G₁ de données temps non contraint et de flux de données G₂ temps contraint, et **en ce qu'**il comporte au moins les étapes suivantes :
Au niveau de la couche de liaison :
• segmenter les flux de données ayant des caractéristiques de temps non contraint compatibles G₁ (410) en plusieurs blocs G_{1A}Bi, G_{1B}Bi, G_{1C}Bi, (411), un sous-bloc correspondant à une cellule unitaire pour un processus de retransmission ARQ, puis
• préparer, (412), une ou plusieurs trames de données TG₁, en ajoutant des en-têtes requis pour le format utilisé pour la transmission,
• réaliser (413) un codage d'une trame de données en tenant compte d'une qualité de service requise, les paramètres du codage sont adaptés à la mise en forme de la trame, produisant des sous-trames, STG_{1Ac}, STG_{1Bc}, STG_{1cc},
• segmenter les flux de données ayant des caractéristiques de temps contraint (420, 421), en plusieurs blocs G_{2A}Bi, G_{2B}Bi,
• préparer (422) une trame correspondante TG₂, en ajoutant un en-tête,
• réaliser (423) un codage et un entrelacement de chaque trame, TG_{2Ac}, TG_{2B}, puis segmenter (424) chaque trame pour obtenir des sous-trames STG_{2AC}, STG_{2BC},
• préparer (425) à partir des sous-trames résultant des étapes de segmentation les données la trame PHY à transmettre,
• préparer (416, 426) plusieurs trames T₃G en mixant les sous-trames issues du flux non contraint G₁ et du flux contraint G₂, les sous-trames STG_{1Ac}, STG_{1Bc}, STG_{1cc}, STG_{2Ac}, STG_{2B},
Au niveau de la couche physique :
• transmettre les trames T₃G.

2. Procédé selon la revendication 1 **caractérisé en ce qu'**il comporte une étape au cours de laquelle on introduit un codage correcteur d'erreur qui fournit des trames codées T₃G_{C} au niveau de la couche physique avant l'étape de transmission.

3. Procédé selon la revendication 1 **caractérisé en ce que** l'étape de transmission des trames T₃G est exécutée en respectant un cycle comportant une étape d'émission d'une première trame, suivie d'une étape d'alternat RX/TX, suivi d'une étape de réception de trames dans un intervalle temporel de réception, suivi de l'émission d'une deuxième trame T₃G.

4. Procédé selon la revendication 1 **caractérisé en ce que** l'étape de transmission des trames T₃G comporte une étape d'émission de trames, suivie d'un temps de garde, suivie d'une émission d'une deuxième trame, suivie d'un temps de garde.

5. Procédé selon la revendication 1 **caractérisé en ce qu'**il comporte une étape de surveillance ou d'écoute des données reçues lors d'un temps correspondant au procédé d'alternat et la prise en compte des données temps contraint du service à temps contraint tel que la phonie G₂ en les traitant avec des données flux non contraint.

6. Système pour transmettre plusieurs flux multiservices en bande HF comportant au moins les éléments suivants un émetteur (1) comprenant au moins un ordonnanceur (10) adapté à exécuter les étapes du procédé selon l'une des revendications 1 à 5, à préparer les trames de données des flux multiservices avant transmission sur un canal HF et un récepteur (15).

## Patentansprüche

1. Verfahren zur Übertragung von Daten in einem mit HF arbeitenden Kommunikationssystem, beinhaltend eine Verbindungsschicht und eine physische Schicht, wobei das System einen Sender und einen Empfänger beinhaltet, wobei der Sender mindestens einen Scheduler beinhaltet, wobei das Verfahren **dadurch gekennzeichnet ist, dass** die Datenströme aus Datenströmen G₁ mit nicht zeitgezwungenen Daten und aus Datenströmen G₂ mit zeitgezwungenen Daten bestehen, und dass es mindestens folgende Schritte beinhaltet:
Auf Höhe der Verbindungsschicht:
* Segmentieren der Datenströme, welche nicht zeitgezwungene Merkmale besitzen, welche G₁ (410) -kompatibel sind, in mehrere Blöcke G_{1A}Bi, G_{1B}Bi, G_{1C}Bi (411), wobei ein Unterblock einer Elementarzelle für einen Übertragungsprozess ARQ entspricht, gefolgt von
* Vorbereiten (412) eines oder mehrerer Datenrahmen TG1, durch Hinzufügen der erforderlichen Header für das bei der Übertragung verwendeten Format,
* Durchführen (413) einer Codierung eines Datenrahmens unter Berücksichtigung einer erforderlichen Servicequalität, wobei die Codierungsparameter an die Formgebung des Rahmens angepasst sind, wodurch Unterrahmen STG_{1Ac}, STG_{1Bc} und STG_{1cc} erzeugt werden,
* Segmentieren der Datenströme, welche zeitgezwungene Merkmale besitzen (420, 421), in mehrere Blöcke G_{2A}Bi, G_{2B}Bi,
* Vorbereiten (422) eines entsprechenden Rahmens TG₂ durch Hinzufügen eines Headers,
* Durchführen (423) einer Codierung und einer Verschachtelung eines jeden Rahmens TG_{2Ac}, TG_{2B}, gefolgt von Segmentieren (424) eines jeden Rahmens zum Erzielen der Unterrahmen STG_{2AC}, STG_{2BC},
* Vorbereiten (425), anhand der Unterrahmen, welche aus den Segmentierungsschritten resultieren, der Daten des zu übertragenden Rahmens PHY,
* Vorbereiten (416, 426) mehrerer Rahmen T₃G durch Mischen der Unterrahmen, welche aus dem nicht gezwungenen Strom G₁ und dem gezwungenen Strom G₂ stammen, nämlich die Unterrahmen STG_{1Ac}, STG_{1Bc}, STG_{1cc}, STG_{2Ac}, STG_{2B},
Auf Höhe der physischen Schicht:
* Übertragen der Rahmen T₃G.

2. Verfahren nach Anspruch 1, **dadurch gekennzeichnet, dass** es einen Schritt beinhaltet, in dessen Verlauf man eine Fehlerkorrekturcodierung einführt, welche codierte Rahmen T₃G_{C} auf Höhe der physischen Schicht vor dem Schritt der Übertragung bereitstellt.

3. Verfahren nach Anspruch 1, **dadurch gekennzeichnet, dass** der Schritt der Übertragung der Rahmen T₃G unter Wahrung eines Zyklus durchgeführt wird, welcher einen Schritt des Sendens eines ersten Rahmens beinhaltet, gefolgt von einem Schritt des Halbduplexbetriebs RX/TX, gefolgt von einem Schritt des Empfangens von Rahmen in einem Empfangszeitintervall, gefolgt vom Senden eines zweiten Rahmens T₃G.

4. Verfahren nach Anspruch 1, **dadurch gekennzeichnet, dass** der Schritt der Übertragung der Rahmen T₃G einen Schritt des Sendens von Rahmen beinhaltet, gefolgt von einer Haltezeit, gefolgt von einer Sendung eines zweiten Rahmens, gefolgt von einer Haltezeit.

5. Verfahren nach Anspruch 1, **dadurch gekennzeichnet, dass** es einen Schritt der Überwachung oder Abhörung der in einer Zeit, welche dem Halbduplex-Verfahren entspricht, empfangenen Daten und die Berücksichtigung der zeitgezwungenen Daten des zeitgezwungenen Services wie der Sprechverbindung G₂ beinhaltet, indem diese mit Daten nicht zeitgezwungener Ströme behandelt werden.

6. System zur Übertragung mehrerer Multiservice-Ströme über ein HF-Band, beinhaltend mindestens folgende Elemente: einen Sender (1), beinhaltend mindestens einen Scheduler (10), welcher dazu geeignet ist, die Schritte des Verfahrens nach einem der Ansprüche 1 bis 5 auszuführen und die Datenrahmen der Multiservice-Ströme vor Übertragung auf einem HF-Kanal vorzubereiten, und einen Empfänger (15).

## Claims

1. A method for transmitting data in a communication system operating in the HF band comprising a link layer and a physical layer, said system comprising a transmitter and a receiver, said transmitter comprising at least one scheduler, the method is **characterized in that** the data streams are made up of non-time-constrained data streams G₁ and time-constrained data streams G₂ and **in that** it comprises at least the following steps:
at the link layer level:
• segmenting the data streams having compatible non-time-constrained characteristics G₁ (410) into a plurality of blocks G_{1A}Bi, G_{1B}Bi, G_{1C}Bi (411), a sub-frame corresponding to a unitary cell for an ARQ retransmission process, then
• preparing (412) one or more data frames TG₁ by adding headers required for the format used for the transmission,
• performing (413) a coding of a data frame, taking into account a required service quality, the parameters of of the coding are adapted to the formatting of the frame, producing sub-frames STG_{1Ac}, STG_{1Bc}, STG_{1cc},
• segmenting the data streams having compatible time-constrained characteristics (420, 421) into a plurality of blocks G_{2A}Bi, G_{2B}Bi,
• preparing (422) one corresponding data frame TG₂ by adding a header,
• performing (423) a coding and interleaving of each frame TG_{2Ac}, TG_{2B}, then segmenting (424) each frame to obtain sub-frames STG_{2Ac}, STG_{2BC},
• preparing (425) the data of the frame PHY to be transmitted from the sub-frames resulting from the segmentation steps,
• preparing (416, 426) a plurality of frames T₃G by mixing the sub-frames obtained from the non-contrained stream G₁ and from the constrained stream G₂, namely the sub-frames STG_{1Ac}, STG_{1Bc}, STG_{1cc}, STG_{2Ac}, STG_{2B},
at the physical layer level:
• transmitting the frames T₃G.

2. Process according to claim 1, **characterized in that** it comprises a step during which an error correcting coding that supplies coded frames T₃G_{C} at the physical layer level is introduced prior to the transmission step.

3. Process according to claim 1, **characterized in that** the step of transmission of the frames T₃G is executed by applying a cycle comprising a step of transmitting a first frame, followed by a RX/TX half-duplex switchover step, followed by a step of receiving frames in a reception time slot, followed by the transmission of a second frame T₃G.

4. Process according to claim 1, **characterized in that** the step of transmission of the frames T₃G comprises a frame transmission step, followed by a guard time, followed by a transmission of a second frame, followed by a guard time.

5. Process according to claim 1, **characterized in that** it comprises a step of monitoring or listening to the data received during a time corresponding to the half-duplex switchover process and of taking into account the time-constrained data of the time-constrained service such as speech G₂ by processing them with the non-constrained stream data.

6. A system for transmitting a plurality of multiservice streams in the HF band comprising at least the following elements: a transmitter (1) comprising at least one scheduler (10) adapted for executing the steps of the method as claimed in one of claims 1 to 5, for preparing the data frames of the multiservice streams prior to transmission over an HF channel and a receiver (15).
